## Europäisches Patentamt
## European Patent Office
## Office européen des brevets

(11) Publication number: **0 207 206**
**B1**

(12) **EUROPEAN PATENT SPECIFICATION**

(45) Date of publication of patent specification: **27.06.90**

(51) Int. Cl.⁵: **F 16 H 25/06**

(21) Application number: **85309187.4**

(22) Date of filing: **17.12.85**

(54) Gearless differential speed reducer.

(30) Priority: **27.06.85 JP 141963/85**

(43) Date of publication of application:
**07.01.87 Bulletin 87/02**

(45) Publication of the grant of the patent:
**27.06.90 Bulletin 90/26**

(84) Designated Contracting States:
**DE FR GB IT SE**

(56) References cited:
**EP-A-0 077 490**

**PRODUCT DESIGN HANDBOOK FOR ISSUE 1956, vol. 26, October 1955, pages E16-E17; H.G. CONWAY: "Coupling of parallel shafts"**
**PATENT ABSTRACTS OF JAPAN, vol. 10, no. 59 (M-459)2116r, 8th March 1986; & JP-A-60 205 058 (TOSHIBA K.K.) 16-10-1985**

(73) Proprietor: **KAMOSEIKO KABUSHIKI KAISHA**
**7-chome, 19-banchi, Kakimoto-cho**
**Toyota Aichi-ken (JP)**

(72) Inventor: **Imase, Kenji**
**7-chome 19-Banchi Kakimoto-cho**
**Toyota Aichi-ken (JP)**

(74) Representative: **Senior, Alan Murray et al**
**J.A. KEMP & CO 14 South Square Gray's Inn**
**London WC1R 5EU (GB)**

Courier Press, Leamington Spa, England.

# EP 0 207 206 B1

**Description**

This invention relates to a speed reducer which can have high reduction ratio, and small thickness.

In modern robot technology, a speed reducer has been associated with an electric motor to reduce its speed for application to a transfer arm. Examples of presently known speed reducers are worm wheel reducers, cyclo reducers, and harmonic drive reducers.

However, it would be desirable to have a speed reducer improved in the following respects: (i) high reduction ratio with compact structure, (ii) high controlling precision with minimum play such as backlash action, (iii) elevated rigidity with high meshing rate, (iv) improved controllability with relatively small inertia force at rotary members, (v) minimum loss of torque with minimum wear.

EP—A—0,077,490 discloses a gearless differential speed reducer upon which the prior art position of claim 1 is based. The device disclosed in EP—A—0,077,490 uses an epi- and a hypo-cycloidal surface rotatably mounted eccentrically with respect to one another; with balls positioned so as to bear on the surfaces, converting stationed motion of one disc into orbital and rotational motion of the other.

By contrast the embodiments of the present invention, as set out in the various claims appended hereto, are characterised in that:

said epicycloidal groove and said hypocycloidal groove are of uniform width, and are formed generally perpendicular to the surface of said respective discs;

the side walls of the epicycloidal groove being of equal height and those of the hypocycloidal groove also being of equal height;

said rollable balls are of diameter greater than the width of the open ends of said epi- and hypo-cycloidal grooves and are in contact with both side walls of both grooves.

In order that the invention may be more clearly understood, the following description is given by way of example only, with reference to the accompanying drawings in which:

Figure 1 is a longitudinal cross sectional view of a speed reducer of the invention;

Figure 2 is an exploded view of the speed reducer;

Figure 3(a), (b) is an explanatory view of the sinuous grooves;

Figure 4 is a view useful in explaining operation of the invention;

Figure 5 is a view similar to Figure 1 of a second embodiment of the invention;

Figure 6 is a view similar to Figure 2 of the second embodiment of the invention;

Figure 7 is a view similar to Figure 1 of a third embodiment of the invention, with a casing removed;

Figure 8 is a view similar to Figure 7 of a fourth embodiment of the invention; and

Figure 9 is a perspective view of a retainer.

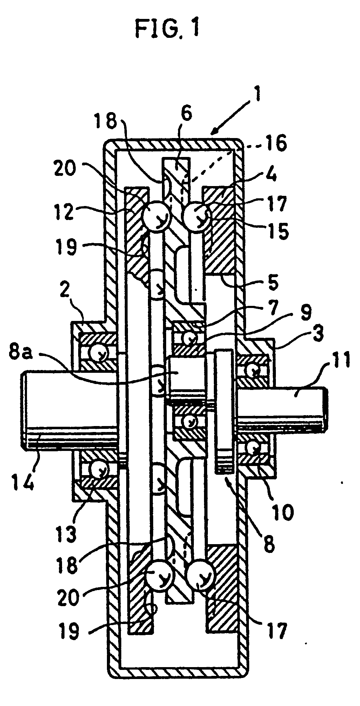

Referring first to Figure 1, numeral 1 designates a box-shaped casing according to a first embodiment of the invention. Support flanges 2, 3 are provided on horizontally opposed walls of the casing 1. An annular disc 4 is disposed in the casing 1, and rigidly secured to the right wall of the casing 1 as shown so as to communicate its central aperture 5 with the flange 3. A circular disc 6 has a central boss 7, and is disposed in the casing 1 to face the disc 4. An eccentric shaft 8 is placed in the casing 1 in the aperture 5 of the disc 4. The shaft 8 is mounted at one end 8a on the boss 7 of the disc 6 through a bearing 9, and at the other end 11 on the flange 3 through a bearing 10 to act as an input portion. In this instance, the shaft 8 directs its eccentricity to correspond to that of sinuous grooves described hereinafter. A rectifier disc 12 is placed in the casing 1 to face the circular disc 6, and has a central output shaft 14 mounted on the flange 2 through a bearing 13.

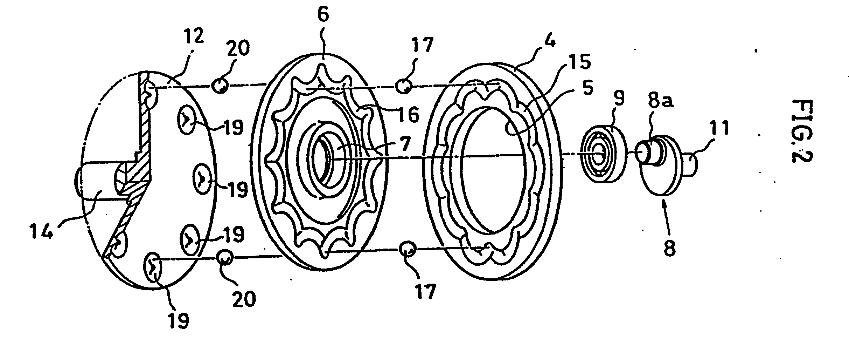

Now, on the surface of the disc 4 is a groove 15 semi-circular in section, as seen in Figure 2. The sinuous groove 15 thus provided is in the form of epicycloid curve continuously formed in the disc 4 along a predetermined pitch circle with half the wave length as a lobe. As can be seen from the drawings the groove 15 is formed generally perpendicularly to the generally planar surface of the disc 4, has uniform width and its side walls are of the same height. The groove 15 has ten lobes in this instance. On the other hand, the circular disc 6 has a sinous groove 16 corresponding to that of the disc 4 on the surface facing the groove 15. The groove 16 is in the form of hypocycloid curve continuously formed in the disc 6 along with pitch circle identical to that just mentioned above but with twelve lobes. As can be seen from the drawings the groove 16 is formed generally perpendicularly to the generally planar surface of the disc 6, has uniform width and its side walls are of the same height. It is necessary to establish a difference of 2 between the number of lobes on the disc 4 and on the disc 6.

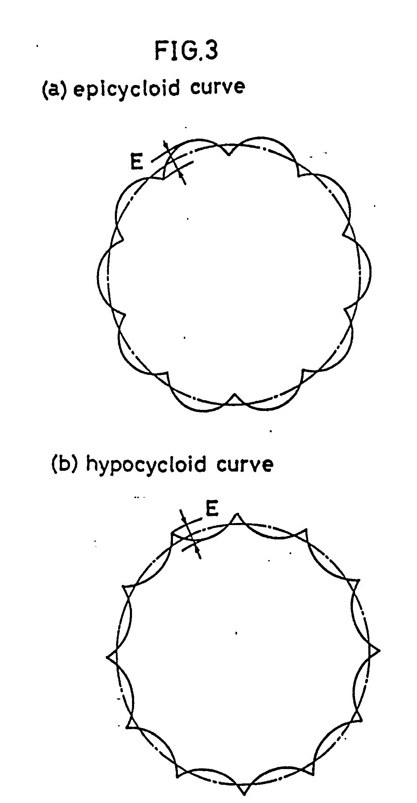

Regarding the epicycloid and hypocycloid curves, they are each obtained by rolling one circle on another circle in circumscribing and inscribing relationship therewith as seen in Figure 3(a), (b) in which the height of the lobe is designated as E, the amount of which acts as an eccentricity. Between the discs 4 and 6, are spherical balls 17 which are made from, for example, steel, positioned in both the grooves 15, 16 at regular intervals. The balls 17 are in number eleven, that is one more than the number of lobes in the groove 15, and adapted to roll along the grooves 15, 16 upon rotational movement of the disc 4. On the opposed surfaces of the disc 6 and the rectifier disc 12, are identical groups of annular grooves 18, 19, the diameters of which correspond to the eccentricity of the grooves 15, 16. Between the disc 6 and the rectifier disc 12, are spherical rigid balls positioned in the annular grooves 18, 19 so as to roll along the grooves 18, 19 with the movement of the disc 6.

With the structure incorporated, for instance, into a transfer robot, the eccentric shaft 8a is drivingly

2

connected to an electric motor via shaft 11 while the rectifier disc 12 connects its output shaft 14 to a transfer arm (not shown).

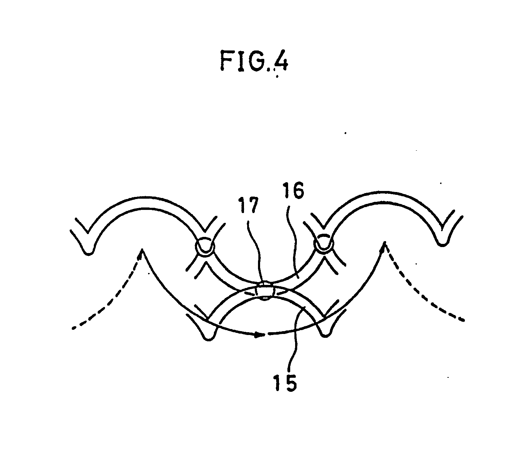

The motor, once energised, allows the shaft 8 to rotate in one direction so as to transmit its rotation to the second disc 6 through the end portion 8a. The disc 6 thus subjected to the rotation about the axis of the shaft 11 also rotates around the end portion 8a due to the oscillating relationship between the grooves 15 and 16 interconnected as they are by the balls 17, as schematically shown in Figure 4.

The disc 6 thus moved, on the other hand, causes the balls 20 to roll around the annular grooves 18, 19 and transmits only a rotational force to the rectifier disc 12 in the direction reverse to that of the eccentric shaft 8, cancelling the component of the eccentric movement of the disc 6. This permits ths shaft 14 of the rectifier disc 12 to rotate so as to activate a transfer arm for carrying such as, for example, an assembly part from one station to another.

In this instance, a reduction ratio obtained is 2 to N+2 wherein N is the number of lobes N in the grooves 17, that is 2/(N+2), since the eccentric shaft 8 causes, in a single revolution, the disc 6 to travel by the length of two lobes. Therefore, ten lobes admits a reduction ratio to be 2/(10+2)=1/6 according to the present embodiment of the invention.

As understood from the description, the structure is such that the discs 4 and 6 are arranged in opposing relationship, admitting the thickness to be reduced for compactness and giving a relatively high reduction ratio.

Further, connection between the discs 4 and 6 is such that play such as, for example, backlash between the discs is reduced so as to determine the rotational angle of the output shaft 14 with high precision.

In addition, the structure is such that the discs 4 and 6 are positively connected through the balls 17 in substantially solid relationship, to be of high rigidity as a whole, while elevating the meshing rate due to the balls 17 being tightly placed at the grooves 16, 17.

Furthermore, the thickness-reduced discs 4 and 6 need only small inertia force themselves, this improving controllability thereof.

Still further, small friction of the balls 17 against the discs 4 and 6 makes it possible to produce an effective speed reduction with a minimum loss of torque.

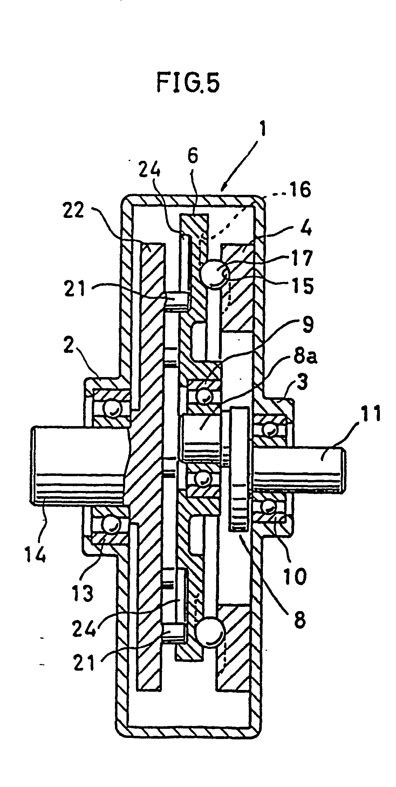

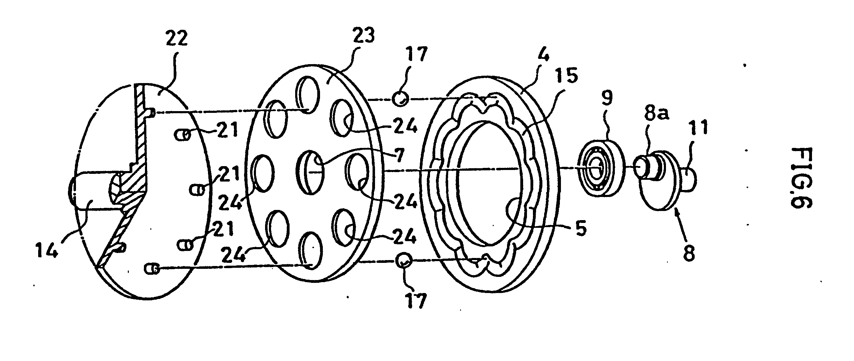

Figure 5 and Figure 6 show a second embodiment of the invention where like parts are indicated by like reference numerals and in which instead of the balls 20, pins 21 are employed on the rectifier disc here shown at 22 in pace of the grooves 19. The pins are parallel with the output shaft 14. A disc 23 has circular concavities 24 into which the pins 21 are admitted, to allow the pins to move therein upon movement of the disc 23. The diameter of the concavities 24 is equivalent to the eccentricity of the grooves 15, 16.

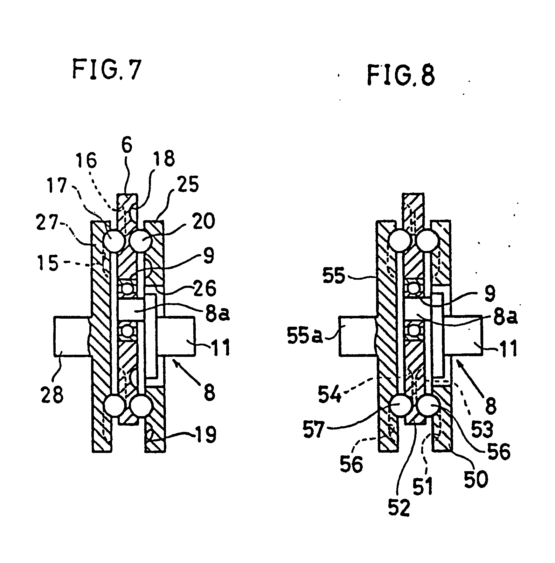

Figure 7 shows a third embodiment of the invention in which the circular disc 4 and the rectifier disc 12 of the first embodiment of the invention are oppositely placed. A rectifier disc 25 has a central hollow portion 26, while a disc 27 has a central output shaft 28 in place of the central hollow 5 of the first embodiment.

Figure 8 shows a fourth embodiment of the invention in which discs are arranged in series to establish a composite speed reduction ration. Numeral 50 designates a circular disc, a sinuous groove 51 of which has a number of lobes as, for example, $(\alpha)$.

A disc 52 has a sinuous groove 53 on one side, to face the groove 51. The groove 53 has the number of lobes as $(\beta)$, where $[\alpha-\beta]=2$. The disc 52 also has a sinuous groove 54 at the other side in which there are a number of lobes as $(\gamma)$. A drive disc 55 has a central output shaft 55a at one side, and a sinuous groove 56 at the other side positioned to face the groove 54 with the groove 56 having the number of lobes as $(\delta)$ wherein $[\gamma-\delta]=2$. Between the groove 51 and 53 is a group of rollable balls 56, while between the grooves 54 and 56 is a group of rollable balls 57.

With this structure, the eccentric shaft 8 transmits its rotation to the disc 52, causing the disc 52 to rotate around the shaft part 8a, and at the same time, going around the pitch circle of the grooves 51, 53. A single rotation of the shaft 8 permits the disc 52 to travel by the length equivalent to that of two lobes of the groove. The disc 52, thus actuated, imparts only the rotational component to the output disc 55 through the group of the balls 57, because the balls rolling along the annular grooves 54, 56 allow the eccentric movement of the disc 52 to be cancelled.

Speed reduction ratios obtained from the fourth embodiment are calculated in a manner similar to the case of a differential planetary gear mechanism. This is shown in Table 1.

Table 1

| | shaft 8 | rectifier disc 50 | disc 52 | disc 55 |
|---|---|---|---|---|
| with all the members fixed | +1 | +1 | +1 | +1 |
| with the shaft 8 fixed | 0 | -1 | $-\dfrac{\alpha}{\beta}$ | $-\dfrac{\alpha}{\beta}\cdot\dfrac{\gamma}{\delta}$ |
| resultant rotation | +1 | 0 | $1-\dfrac{\alpha}{\beta}$ | $1-\dfrac{\alpha\cdot\gamma}{\beta\cdot\delta}$ |

Table 1 teaches that a single clockwise rotation (+1) of the input shaft 8 provides rotation of

$$1-\frac{\alpha\cdot\gamma}{\beta\cdot\delta}$$

of the output shaft 55a, when the input shaft 8 is in fixed condition. By way of illustration, reduction ratios are shown from Tables 2~5, with combined numbers of lobes as 8, 10, 10 and 12.

Table 2

| number of lobes | | | | reduction ratio |
|---|---|---|---|---|
| $\alpha$ | $\beta$ | $\gamma$ | $\delta$ | |
| 8 | 10 | 10 | 12 | $1-\dfrac{8\times10}{10\times12}=1/3$ |
| 10 | 12 | 8 | 10 | $1-\dfrac{8\times10}{10\times12}=1/3$ |

Table 3

| number of lobes | | | | reduction ratio |
|---|---|---|---|---|
| $\alpha$ | $\beta$ | $\gamma$ | $\delta$ | |
| 8 | 10 | 12 | 10 | $1-\dfrac{8\times12}{10\times10}=1/25$ |
| 12 | 10 | 8 | 10 | $1-\dfrac{8\times12}{10\times10}=1/25$ |

Table 4

| number of lobes | | | | reduction ratio |
|---|---|---|---|---|
| $\alpha$ | $\beta$ | $\gamma$ | $\delta$ | |
| 10 | 8 | 10 | 12 | $1 - \dfrac{10 \times 10}{8 \times 12} = -1/24$ |
| 10 | 12 | 10 | 8 | $1 - \dfrac{10 \times 10}{8 \times 12} = -1/24$ |

Table 5

| number of lobes | | | | reduction ratio |
|---|---|---|---|---|
| $\alpha$ | $\beta$ | $\gamma$ | $\delta$ | |
| 10 | 8 | 12 | 10 | $1 - \dfrac{10 \times 12}{8 \times 10} = -1/2$ |
| 12 | 10 | 10 | 8 | $1 - \dfrac{10 \times 12}{8 \times 10} = -1/2$ |

As understood from the foregoing description, discs connected in series make it possible to obtain reduction ratios changing from low to high ratios.

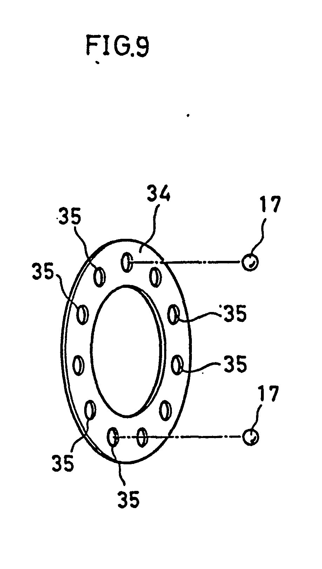

Figure 9 shows a cage or a retainer 34 which can be used to place rollable balls 17 in position so as to make mounting operation easy when the balls are mounted. For this purpose, the ring-shaped retainer 34 has holes 35 in an angular arrangement into which the balls are fitted. Another retainer of this kind may be employed for the balls 20.

The sinuous and annular grooves may be formed V-shaped in section to make the balls come into line-contact with the inner walls of the grooves. Further, these balls can be made from tough and wear-resistant material such as ceramics. Annular grooves such as 18, 19 into which steel balls are admitted may be altered to circular cavities.

**Claims**

1. A gearless differential speed reducer structure comprising:
an input shaft (11),
a shaft (8) eccentrically fixed to said input shaft (11),
a first disc (6) rotatably mounted on said shaft (8)
one of a hypocycloidal and epicycloidal groove (16) provided on a first surface of said first disc (6),
a second disc (4) having a central hole through which said shaft (8) extends, said second disc being fixed to a stationary member (1), and parallel to said first disc, facing said grooved surface of said first disc (6),
the other of an epicycloidal and hypocycloidal groove (15) provided on a surface of said second disc facing said first surface of said first disc (6),
said epicycloidal and said hypocycloidal grooves (15, 16) forming closed loops,

a plurality of rollable balls (17) placed in said hypocycloidal groove and said epicycloidal groove, and driven to roll along said grooves so that in use rotation of said input shaft (11) is converted into first and second rotary movements of said first disc, said first rotary movement being a rotation of said first disc about its own axis and said second rotary movement being a rotation of the axis of said first disc about the axis of the input shaft,

a rectifier disc (12) mounted on another shaft (14) facing the surface of the first disc (6) opposite said first surface so as to serve as a speed reduction output, and

rectifier means (18, 19, 20) provided between said first disc and said rectifier disc (12) so as to transmit said first rotary movement of said first disc and not the second rotary movement of said first disc;

the difference in the number of lobes of said epicycloidal groove (15) and said hypocycloidal groove (16) being two; characterised in that:

said epicycloidal groove (15) and said hypocycloidal groove (16) are of uniform width, and are formed generally perpendicularly to the surface of said respective discs;

the side walls of the epicycloidal groove being of equal height and those of the hypocycloidal groove also being of equal height;

said rollable balls (17) are of diameter greater than the width of the open end of said epi- and hypo-cycloidal grooves and are continuously in contact with both side walls of both grooves (15, 16).

2. A gearless differential reducer structure according to claim 1 wherein said rollable balls (17) are spherical and made from a tough and wear resistant ceramic material.

3. A gearless differential reducer structure according to claim 1 wherein said rollable balls (17) are spherical and made from steel.

4. A structure according to claim 1, 2 or 3 wherein said rectifier means comprises annular grooves (18, 19) provided in said second disc and said rectifier disc to face each other, and having a diameter corresponding to the eccentricity of said eccentric shaft; and balls (17) positioned into said annular grooves.

5. A structure according to claim 1, 2 or 3 characterising in that said means comprises concavities (24) provided in said second disc and said rectifier disc and facing each other, and having diameters corresponding to the eccentricity of said eccentric shaft; and rollable balls positioned into said concavities.

6. A structure according to claim 1, 2 or 3, characterising in that said means comprises projections (21) provided on said rectifier disc and concavities (24) provided with said second disc to receive said projections and having a diameter corresponding to the eccentricity of said eccentric shaft.

**Patentansprüche**

1. Untersetzungsgetriebe ohne Verzahnung mit
einer Eingangswelle (11),
einer Welle (8), die auf der Eingangswelle (11) exzentrisch befestigt ist,
einer ersten Scheibe (6), die auf der Welle (8) drehbar angeordnet ist,
einer hypozycloidischen oder einer epizycloidischen Nut (16), die auf einer ersten Oberfläche der ersten Scheibe (6) vorgesehen ist,
einer zweiten Scheibe (4) mit einem zentralen Loch, durch welches sich die Welle (8) erstreckt, wobei die zweite Scheibe an einem stationären Glied (1) befestigt und parallel zur ersten Scheibe angeordnet ist, wobei sie der mit Nuten versehenen Oberfläche der ersten Scheibe (6) gegenübersteht,
der anderen Nut (15), die epizycloidisch bzw. hypozycloidisch ausgebildet und auf einer Oberfläche der zweiten Scheibe vorgesehen ist, wobei sie der ersten Oberfläche der ersten Scheibe (6) gegenübersteht,
wobei die epizycloidische und hypozycloidische Nuten (15, 16) geschlossene Schleifen ausbilden,
mehreren abrollenden Kugeln (17), die in der hypozycloidischen und epizycloidischen Nut angeordnet sind und angetrieben sind, um längs den Nuten zu rollen, so daß im Betrieb die Rotation der Eingangswelle (11) in erste und zweite Rotationsbewegungen der ersten Scheibe umgewandelt wird, wobei die erste Rotationsbewegung eine Rotation der ersten Scheibe um ihre eigene Achse und die zweite Rotationsbewegung eine Rotation der Achse der ersten Scheibe um die Achse der Eingangswelle darstellt,
einer Rektifizierscheibe (12), die auf einer anderen Welle (14) angeordnet ist und der der ersten Oberfläche entgegengesetzten Oberfläche der ersten Scheibe (6) gegenübersteht, um so als Untersetzungsausgang zu dienen, und
einer Rektifiziereinrichtung (18, 19, 20), die zwischen der ersten Scheibe und der Rektifizierscheibe (12) angeordnet ist, so daß sie die erste Drehbewegung der ersten Scheibe und nicht die zweite Drehbewegung der ersten Scheibe überträgt;
wobei die Differenz der Zahl der Bögen der epizycloidischen Nut (15) und der hypozycloidischen Nut (16) zwei ist; dadurch gekennzeichnet, daß
die epizycloidische Nut (15) und die hypozycloidische Nut (16) eine einheitliche Breite aufweisen und im wesentlichen senkrecht zur Oberfläche der entsprechenden Scheiben ausgebildet sind;
die Seitenwände der epizycloidischen Nut und der hypozycloidischen Nut die gleiche Höhe aufweisen;
der Durchmesser der abrollenden Kugeln (17) größer ist als die Breite der offenen Enden der epi- und hypozycloidischen Nuten, und die Kugeln ständig in Kontakt mit den beiden Seitenwänden der beiden Nuten (15, 16) sind.

2. Untersetzungsgetriebe ohne Verzahnung nach Anspruch 1, wobei die abrollenden Kugeln (17) sphärisch sind und aus einem harten und verschleißfesten Keramikmaterial bestehen.

3. Untersetzungsgetriebe ohne Verzahnung nach Anspruch 1, wobei die abrollenden Kugeln (17) sphärisch sind und aus Stahl bestehen.

4. Getriebe nach einem der Ansprüche 1 bis 3, wobei die Rektifiziereinrichtung kreisförmige Nuten (18, 19) aufweist, die in der zweiten Scheibe und der Rektifizierscheibe vorgesehen sind, und sich einander gegenüberstehen, und die Nuten einen Durchmesser aufweisen, der der Exzentrizität der exzentrischen Welle entspricht; und wobei Kugeln (17) in den ringförmigen Nuten angeordnet sind.

5. Getriebe nach einem der Ansprüche 1 bis 3, dadurch gekennzeichnet, daß die Einrichtung Konkavitäten (24), die in der zweiten Scheibe und der Rektifizierscheibe vorgesehen sind und einander gegenüberstehen und einen Durchmesser aufweisen, der der Exzentrizität der exzentrischen Welle entspricht; und daß abrollende Kugeln in den Konkavitäten angeordnet sind.

6. Getriebe nach einem der Ansprüche 1 bis 3, dadurch gekennzeichnet, daß die Einrichtung Vorsprünge (21), die auf der Rektifizierscheibe vorgesehen sind und Konkavitäten (24) aufweist, die auf der zweiten Scheibe vorgesehen sind, um die Vorsprünge aufzunehmen, und einen Durchmesser haben, der der Exzentrizität der exzentrischen Welle entspricht.

**Revendications**

1. Une structure de réducteur différentiel de vitesse sans engrenage comprenant
un arbre d'entrée (11),
un arbre (8) fixé de façon excentrique sur ledit arbre (11),
un premier disque (6) monté à rotation sur ledit arbre (8),
une première rainure parmi deux d'entre elles, l'une hypocycloïdale et l'aumtre épicycloïdale, ménagée sur une première surface dudit premier disque (6),
et un deuxième disque (4) comportant un trou central à travers lequel passe ledit arbre (8), ledit deuxième disque étant fixé à un organe stationnaire (1) et parallèle audit premier disque tourné vers la surface rainurée dudit premier disque (6),
l'autre des rainures, hypocycloïdale et épicycloïdale, ménagée sur une surface dudit deuxième disque tournée vers ladite première surface dudit premier disque (6), lesdites rainures hypocycloïdale et épicycloïdale (15 et 16) formant des boucles fermées,
plusieurs billes susceptibles de rouler (17) placées dans ladite rainure hypocycloïdale et ladite rainure épicycloïdale, et entrainées pour rouler le long desdites rainures de façon que la rotation dudit arbre d'entrée (11) soit convetie, en utilisation, en des premier et deuxième déplacements en rotation dudit premier disque, ledit premier déplacement en rotation étant une rotation dudit premier disque autour de son axe propre et ledit deuxième déplacement en rotation étant une rotation de l'axe dudit premier disque autour de l'axe de l'arbre d'entrée,
un disque redresseur (12) monté sur un autre arbre (14) tourné vers la surface du premier disque (8) opposé à ladite première surface de façon à servir de sortie de réduction de vitesse, et
des moyens redresseurs (18, 19, 20) disposés entre ledit premier disque et ledit disque redresseur (12) de façon à transmettre ledit premier mouvement de rotation dudit premier disque et non le deuxième mouvement de rotation dudit premier disque;
la différence entre les nombres de lobes de ladite rainure épicycloïdale (15) et de ladite rainure hypocycloïdale (16) étant de deux; caractérisée en ce que:
ladite rainure épicycloïdale (15) et ladite rainure hypocycloïdale (16) sont de largeur uniforme, et sont ménagées généralement perpendiculairement à la surface desdits disques respectifs;
les parois latérales de la rainure hypocycloïdale étant de hauteur égale et celles de la rainure épicycloïdale étant aussi de hauteur égale;
lesdites billes pouvant rouler (17) sont d'un diamètre supérieur à la largeur de l'extrémité ouverte desdites rainures épicycloïdale et hypocycloïdale et sont en permanence en contact avec les deux parois latérales des deux rainures (15, 16).

2. Une structure de réducteur différentiel sans engrenage selon la revendication 1, dans laquelle lesdites billes pouvant tourner (17) sont sphériques et sont en une matière céramique robuste et résistante à l'usure.

3. Une structure de réducteur différentiel sur engrenage selon la revendication 1, dans laquelle lesdites billes pouvant tourner (17) sont sphériques et en acier.

4. Une structure selon la revendication 1, 2 ou 3, dans laquelle lesdits moyens redresseurs comprennent des rainures annulaires (18, 19) ménagées dans ledit deuxième disque et ledit disque redresseur de manière à être tournées l'une vers l'autre, et possédant un diamètre correspondant à l'excentricité dudit arbre excentrique; et des billes (17) positionnées dans lesdites rainures annulaires.

5. Une structure selon la revendication 1, 2 ou 3, caractérisée en ce que lesdits moyens comprennent des concavités (24) ménagées dans ledit deuxième disque et ledit disque redresseur et tournées l'une vers l'autre, et possédant des diamètres correspondant à l'excentricité dudit arbre excentrique; et des billes pouvant tourner positionnées dans lesdites concavités.

6. Une structure selon la revendication 1, 2 ou 3, caractérisée en ce que lesdits moyens comprennent

7

des saillies (21) formées sur ledit disque redresseur et des concavités (24) ménagées dans ledit deuxième disque pour recevoir lesdites saillies et possédant un diamètre correspondant à l'excentricité de l'arbre excentrique.

EP 0 207 206 B1

FIG. 1

# FIG. 2

# FIG.3

## (a) epicycloid curve

## (b) hypocycloid curve

FIG.4

# FIG.5

# FIG.6

FIG. 7

FIG. 8

FIG.9